# EUROPEAN PATENT SPECIFICATION

(11) **EP 0 906 701 B1**
(45) Date of publication and mention of the grant of the patent: **15.11.2006**
(21) Application number: 98904328.6
(22) Date of filing: 05.03.1998
(51) Int. Cl.: H04N 9/44, H04N 9/45, H04N 9/64, H04N 11/16, H04N 11/14

(54) **COLOR DEMODULATION USING DIGITAL AND ANALOG CIRCUITS**
FARBDEMODULATION MIT DIGITALEN UND ANALOGEN SCHALTUNGEN
DEMODULATION DE COULEUR AVEC CIRCUITS DIGITALS ET ANALOGIQUES

(30) Priority: 09.04.1997 EP 97201029
(43) Date of publication of application: 07.04.1999
(73) Proprietor: Koninklijke Philips Electronics N.V., 5621 BA Eindhoven (NL)
(72) Inventor: WISSING, Roy, Wilhelmus, Bernardus, NL-5656 AA Eindhoven (NL); VAN LAMMEREN, Johannes, Petrus, Maria, NL-5656 AA Eindhoven (NL); PELGROM, Marcellinus, Johannes, Maria, NL-5656 AA Eindhoven (NL)
(74) Representative: Steenbeek, Leonardus Johannes
(86) International application number: PCT/IB1998/000294
(87) International publication number: WO 1998/046027

(56) References cited:
- WO-A-91/12696
- CH-A- 683 579
- US-A- 4 090 244
- US-A- 4 694 327
- US-A- 4 736 237

## Description

The invention relates to a method and a device for color decoding, and to a television signal display apparatus (TV set, PC having TV signal processing functions, etc.) comprising such a color decoding device.

US 4,694,327 discloses a digital television receiver including a first phase locked loop which develops a sampling clock signal that is locked to the horizontal line synchronizing signal components of a composite video signal. A second digital phase locked loop is clocked by the sampling clock signal and develops a digital signal that is phase locked to the color burst signal. This digital signal is used as a regenerated color subcarrier signal to synchronously demodulate the chrominance components of the composite video signals into I and Q color difference signals. To compensate for frequency instability in the regenerated subcarrier signal caused by frequency instabilities in the line-locked clock signal, a third digital phase locked loop develops an output signal which is phase locked to a reference signal generated by a crystal controlled oscillator. Control signals from the third phase locked loop are applied to the second phase locked loop to substantially compensate for frequency instabilities in the regenerated subcarrier signal that are induced by the clock signals.

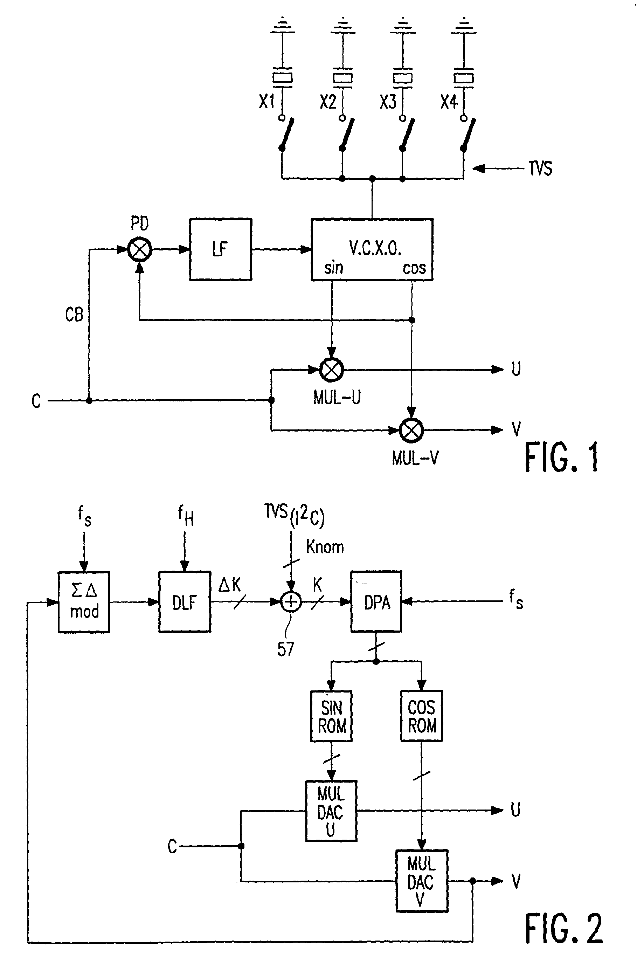

Until now, multi-standard (PAL/NTSC) color decoding without digitizing the chrominance signal has mainly been done using an analog phase-locked loop, in which a voltage controlled crystal oscillator (VCXO) is locked to the color burst signal, see J. van Lammeren et al., Multi-Standard Video Front End, IEEE Transactions on Consumer Electronics, Vol. 37, No. 3, August 1991, pp. 190-196. A simplified diagram of a prior art analog color decoder is given in Fig. 1. The voltage controlled crystal oscillator VCXO regenerates sine and cosine versions of the color subcarrier, both with the correct phase. The subcarrier signals are fed to analog multipliers, where they are multiplied with the chrominance signal. By these multiplications, the chroma quadrature components U and V are separated and demodulated. The main disadvantage of this type of color decoder is that for each variant of the PAL/NTSC standards a different external crystal is necessary. Therefore a conventional multi-standard color decoder IC has to be equipped with several external crystals which can be tuned satisfactorily, and thus with several additional IC pins.

In Murayama et al., Single-Chip BICMOS Multistandard Video Processor, IEEE Transactions on Consumer Electronics, Vol. 42, No. 3, August 1996, pp. 739-749, a color decoder is described that uses only one external crystal for decoding all variants of the PAL/NTSC standards. However, that system has some disadvantages:
- The external crystal that is used in this system must still be a crystal which can be tuned satisfactorily. Tunable crystals are much more expensive than standard crystals, which are poorly tunable.
- As the crystal oscillator (VCXO) in this system is locked to the incoming color burst, it can not be used at the same time as an asynchronous clock generator for other on-chip applications, e.g. teletext decoding or A/D and D/A conversion.
- The system contains an analog PLL that acts as a bandpass filter for the digitally generated subcarrier. The performance of the VCO in this PLL completely determines the overall quality of the color decoder. The required specifications for this VCO can only be achieved when using a well-characterized process (e.g. BiCMOS) and will be degraded by the presence of digital circuitry on the chip, which causes substrate noise. As there is a trend towards CMOS processes and more and more digital functionality, this color decoder is not fully 'future proof'.
- The automatic phase control (APC) loop still requires an external loop filter, which necessitates an extra IC pin.

It is, inter alia, an object of the invention to provide better multi-standard color decoding. To this end, a first aspect of the invention provides a method as defined in claim 1. A second aspect of the invention provides a quadrature signal demodulator as defined in claim 6. A third aspect of the invention provides a television signal display apparatus (TV set, PC having TV signal processing functions, etc.) comprising such a demodulator as a color decoding device. Advantageous embodiments are defined in the dependent claims.

In a method of demodulating an analog chrominance signal in accordance with a primary aspect of the present invention, digital quadrature signals are generated for demodulating the analog chrominance signal to obtain analog demodulated color difference signals. A digital phase error signal is furnished from at least one of the analog demodulated color difference signals. The digital phase error signal is digitally filtered to obtain a phase control signal for the digital quadrature signals generation.

These and other aspects of the invention will be apparent from and elucidated with reference to the embodiments described hereinafter.

In the drawings:
Fig. 1 shows a prior art color decoder;
Fig. 2 shows an embodiment of a color decoder in accordance with the present invention;
Fig. 3 shows an embodiment of a Sigma-Delta modulator for use in the embodiment of Fig. 2;
Fig. 4 shows an embodiment of a digital loop filter for use in the embodiment of Fig. 2; and
Fig. 5 shows an embodiment of a television display apparatus comprising the color decoder of Fig. 2.

A simplified diagram of a prior art analog color decoder is given in Fig. 1. The voltage controlled crystal oscillator VCXO regenerates a sin and a cos version of the color subcarrier, both with the correct phase. The subcarrier signals sin, cos are fed to analog multipliers MUL-U, MUL-V, where they are multiplied by a chrominance signal C. By these multiplications, the chroma quadrature components U and V are separated and demodulated. For each variant of the PAL/NTSC standards a different external crystal X1, X2, X3, X4 is present. Switches controlled by a TV standard indicating signal TVS connect the desired crystal to the oscillator VCXO. A color burst part CB of the chrominance signal C and the cos signal from the oscillator VCXO are applied to a phase detector PD, whose output is coupled to the oscillator VCXO through a loop filter LF.

A preferred embodiment of the present invention is a multi-standard color decoder that deals with all the disadvantages mentioned above. It relates to a mixed-signal system that needs only one (external) asynchronous crystal clock to demodulate all the variants of the PAL/NTSC color system, without digitizing the analog chrominance signal. For example, the clock signal already present for TXT processing can be used. Moreover, the system needs no additional external components/IC-pins and does not contain any highly critical analog modules. The loop filter can be made inside an IC. The decoder can therefore be realised both in BiCMOS and mainstream CMOS processes and can also be easily combined with digital functionality.

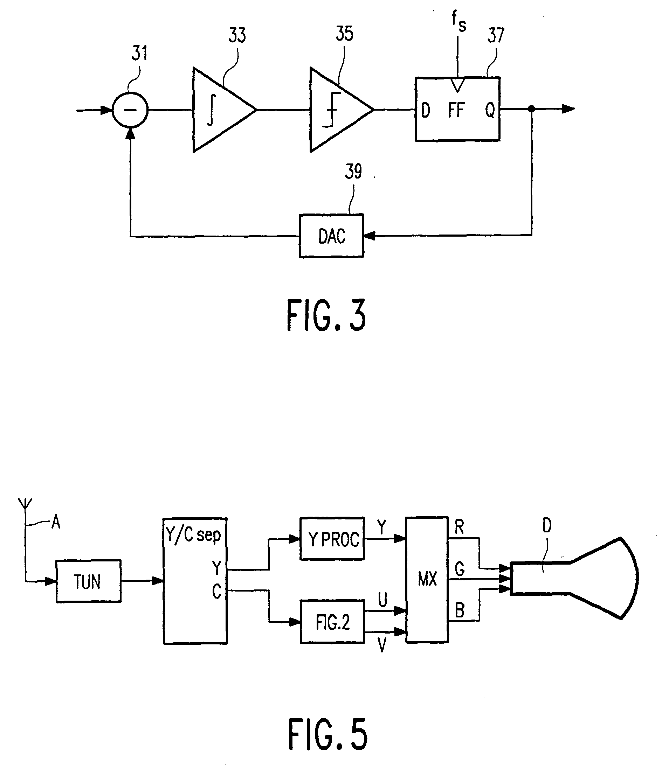

A block diagram of a preferred embodiment of the invention is given in Fig. 2. The heart of the system is formed by a digital phase accumulator DPA. It is used to generate the different subcarrier frequencies from a crystal-stable reference clock fs e.g. of 27 MHz. The principle of the phase accumulator, also called Discrete Time Oscillator (DTO), Direct Digital Synthesizer (DDS), or ratio-counter, is described in Murayama et al., Single-Chip BICMOS Multistandard Video Processor, IEEE Transactions on Consumer Electronics, Vol. 42, No. 3, August 1996, pp. 739-749, and in C.P. Sandbank, Digital Television, Wiley 1990. As the phase accumulator DPA generates a digital sawtooth of the desired subcarrier frequency, it is followed by two ROM tables, SIN ROM and COS ROM, that contain sine wave and cosine wave amplitude data. In this way the sawtooth is converted into both a sine and a cosine waveform of which the spurious components are sufficiently suppressed. Moreover an excellent phase stability between sine and cosine is obtained. The digital subcarrier signals are multiplied by the analog chrominance signal C using two multiplying D/A converters, namely MUL DAC U and MUL DAC V. These are D/A converters of which the reference input is controlled by an analog signal C instead of being fixed it to a reference source. For example, a resistor string D/A converter whose resistance ladder is controlled by a differential analog input, or a current D/A converter with binary weighted current sources controlled by a differential analog input. The analog output signals of the MUL DACs are the demodulated color difference signals U and V.

The digital subcarrier regenerator, formed by the phase accumulator DPA and the ROM look up tables SIN ROM and COS ROM, is locked to the incoming color burst by placing it in a phase-locked loop (PLL). During the burst key period, one of the MUL DACs (MUL DAC V) acts as the phase detector for this PLL. The MUL DAC generates an analog phase error that is digitized by a simple first order 1-bit Sigma-Delta modulator ΣΔ mod operating at the system clock frequency fs of 27 MHz. The Sigma-Delta modulator is a well known example of an attractive 1-bit A/D converter; alternatives are conceivable. The Sigma-Delta modulator is followed by a digital loop filter DLF that mainly operates at the TV line-frequency (fH). The digital filter DLF replaces the external loop filter of the analog color decoder and can also be easily combined with the decimation filter of the Sigma-Delta modulator. Besides, the digital loop filter DLF contains a PAL averager that eliminates the PAL H/2 burst swing. The digital output signal of the loop filter DLF is used to control the phase accumulator DPA, so that it can remain in-lock with the color burst. The output signal of the loop filter DLF forms a small offset ΔK on the nominal input word Knom of the phase accumulator DPA. The nominal input word Knom is preset via the I2C bus and is determined by the color TV standard TVS to be received.

The preferred embodiment of Fig. 2 shows the following advantages. Instead of four tunable external crystals, an asynchronous crystal-stable system clock is used. The chrominance signal path remains analog. Instead of an external loop filter, an integratable digital loop filter is used. Highly critical analog components are avoided. Unlike the Murayama circuit having an analog PLL to adjust the clock frequency while the phase control signal K applied to the digital phase accumulator DPA is fixed, the preferred embodiment of the present invention features a digital PLL of which the phase control signal K is adjusted while the clock frequency is fixed so that, for example, the TXT clock can be used.

Fig. 3 shows an embodiment of a Sigma-Delta modulator for use in the color decoder of Fig. 2. The analog signal from the MUL DAC V of Fig. 2 is applied to a first input of a subtracter 31, whose output is connected to a cascade connection of an integrator 33, a comparator 35, and a D flipflop 37 to obtain an output bitstream as a result of the 1-bit Sigma-Delta modulation. The output bitstream is applied to a second input of the subtracter 31 through a 1-bit D/A convertor 39, which may be formed by a switched current source. The integrator 33, the comparator 35, and the D flipflop 37 together perform a pulse-density modulation and a noise-shaping function. The used Sigma-Delta modulator for digitizing the phase error has the following advantages. A dynamic range of 60 dB can easily be achieved in the frequency band of interest (0 - 7.8 kHz = 0.5 fH). It consists of very small and simple circuits compared to a conventional A/D converter. Because of the high sampling frequency of 27 MHz, no analog pre-filter is required (filtering would cause response problems). Digital post-filtering can easily be combined with a loop filter.

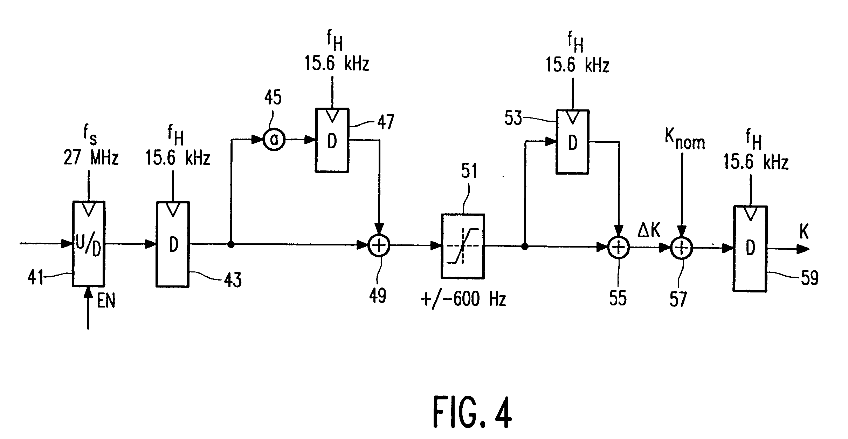

Fig. 4 shows an embodiment of a digital loop filter DLF for use in the color decoder of Fig. 2. The bitstream supplied by the Sigma-Delta modulator of Fig. 3 is applied to an up/down counter 41 which is enabled by a burst gate signal and clocked by the highfrequency system clock, and which acts as a decimation filter and as an integrator of the PLL loop filter. The output of the counter is applied to a decimating D flipflop 43 clocked by a line frequency signal fH for providing a digitized and integrated phase error. The remainder of the loop filter of Fig. 4 takes care of the loop stability, gives the PLL desired parameters as to damping and natural frequency, provides a sufficient suppression of the PAL H/2 swing (> 45 dB), and limits the tuning range of the digital quadrature generator formed by the digital phase accumulator DPA and the sine and cosine ROMs to a range of ± 600 Hz. The output of the D flipflop 43 is applied to a differentiator which comprises a multiplier 45, a D flipflop 47, and an adder 49 which adds the output of the D flipflop 47 to the output of the D flipflop 43. The output of the adder 49 is applied to a frequency range limiter 51. An output of the frequency range limiter 51 is applied to an averager which comprises a D flipflop 53, and an adder 55 which adds the output of the D flipflop 53 to the output of the frequency range limiter 51. The output of the adder 55 supplies the offset AK referred to with reference to Fig. 2. An adder 57, also shown in Fig. 2, adds this offset ÄK to the nominal value K which is determined by the TV standard. An output of the adder 57 is applied to a D flipflop 59 which furnishes the phase control signal K for the digital phase accumulator DPA of Fig. 2.

Fig. 5 shows an embodiment of a television display apparatus comprising the color decoder of Fig. 2. A television signal is received by an antenna A and applied to a tuner TUN which carries out HF and IF demodulation functions to furnish a baseband video signal to a Y/C separator Y/C sep. The Y/C separator supplies a luminance signal Y to a luminance processor Y proc for carrying out functions such as sharpness improvement etc. The separator supplies a chrominance signal C to the color decoder of Fig. 2 to obtain demodulated U and V signals. A matrix circuit MX converts the Y, U and V signals into R, G, and B color signals which are displayed on a display device D.

It should be noted that the above-mentioned embodiments illustrate rather than limit the invention, and that those skilled in the art will be able to design many alternative embodiments without departing from the scope of the appended claims. In the claims, any reference signs placed in parentheses shall not be construed as limiting the claim. The invention can be implemented by means of hardware comprising several distinct elements, and by means of a suitably programmed computer.

## Claims

1. A method of demodulating an analog chrominance signal (C), the method comprising the steps of:
- generating (DPA, SIN ROM, COS ROM) digital quadrature signals with at least one digital phase accumulator (DPA);
- demodulating (MUL DAC U, MUL DAC V) said analog chrominance signal (C) by means of said digital quadrature signals with at least one multiplying digital/analog converter (MUL DAC) to obtain analog demodulated color difference signals (U, V);
- furnishing (ΣΔ mod) a digital phase error signal from at least one (V) of said analog demodulated color difference signals (U, V) with at least one analog/digital converter; and
- digitally filtering (DLF) said digital phase error signal to obtain a phase control signal (K) for said digital quadrature signals generating step (DPA, SIN ROM, COS ROM).

2. A method as claimed in claim 1, wherein said digital quadrature signals generating step (DPA, SIN ROM, COS ROM) comprises the steps of:
- accumulating (DPA) said phase control signal (K) to obtain address signals; and
- addressing look up tables (SIN ROM, COS ROM) by means of said address signals to obtain said digital quadrature signals.

3. A method as claimed in claim 1, wherein said demodulating step (MUL DAC U, MUL DAC V) includes the steps of applying said analog chrominance signal (C) to reference inputs of multiplying D/A converters having digital inputs coupled to receive said digital quadrature signals.

4. A method as claimed in claim 1, wherein said digital phase error furnishing step (ΣΔ mod) includes a 1-bit Sigma-Delta modulation of one (V) of said analog demodulated color difference signals (U, V).

5. A method as claimed in claim 1, wherein a fixed high frequency system clock (fs) is used to obtain said digital quadrature signals.

6. A device for demodulating an analog quadrature modulated signal (C), the device comprising:
- at least one digital phase accumulator (DPA) arranged for generating (DPA, SIN ROM, COS ROM) digital quadrature signals;
- at least one multiplying digital/analog converter arranged for demodulating (MUL DAC U, MUL DAC V) said analog quadrature modulated signal (C) by means of said digital quadrature signals to obtain analog demodulated signals (U, V);
- at least one analog/digital converter arranged for furnishing (ΣΔ mod) a digital phase error signal from at least one (V) of said analog demodulated signals (U, V); and
- means for digitally filtering (DLF) said digital phase error signal to obtain a phase control signal (K) for said digital quadrature signals generating means (DPA, SIN ROM, COS ROM).

7. A television signal display apparatus, comprising:
- means (Y/C sep) for generating luminance (Y) and chrominance (C) signals;
- a device (Fig. 2) as claimed in claim 6 for demodulating an analog chrominance signal (C) to obtain analog demodulated color difference signals (U, V);
- means (MX) for furnishing color signals (R, G, B) from said luminance signal (Y) and said analog demodulated color difference signals (U, V); and
- means (D) for displaying said color signals (R, G, B).

## Patentansprüche

1. Verfahren zum Demodulieren eines analogen Farbartsignals (C), wobei das Verfahren die nachfolgenden Verfahrensschritte umfasst:
- das Erzeugen (DPA, SIN ROM, COS ROM) digitaler Quadratursignale mit wenigstens einem digitalen Phasenakkumulator (DPA);
- das Demodulieren (MUL DAC U, MUL DAC V) des genannten analogen Farbartsignals (C) mit Hilfe der genannten digitalen Quadratursignale mit wenigstens einem multiplizierenden Digital-Analog-Wandler (MUL DAC) zum Erhalten analoger demodulierter Farbdifferenzsignale (U, V);
- das Ausstallen (ΣΔ mod) eines digitalen Phasenfehlersignals von wenigstens einem (V) der genannten analogen demodulierten Farbdifferenzsignale (U, V) mit wenigstens einem Analog-Digital-Wandler; und
- das digitale Filtern (DLF) des genannten digitalen Phasenfehlersignals zum Erhalten eines Phasensteuersignals (K) für den genannten Erzeugungsschritt der genannten digitalen Quadratursignale (DPA, SIN ROM, COS ROM).

2. Verfahren nach Anspruch 1, wobei der genannte Erzeugungsschritt der digitalen Quadratursignale (DPA, SIN ROM, COS ROM) die nachfolgenden Verfahrensschritte umfasst:
- das Akkumulieren (DPA) des genannten Phasensteuersignals (K) zum Erhalten von Adresssignalen; und
- das Adressieren von Nachschlagtabellen (SIN ROM, COS ROM) mit Hilfe der genannten Adresssignale zum Erhalten der genannten digitalen Quadratursignale.

3. Verfahren nach Anspruch 1, wobei der genannte Demodulationsschritt (MUL DAC U, MUL DAC V) die Schritte zur Zuführung des genannten analogen Farbartsignals (C) zu Bezugseingängen von multiplizierenden Digital-Analog-Wandlern, von denen digitale Eingänge derart gekoppelt sind, dass sie die genannten digitalen Quadratursignale empfangen.

4. Verfahren nach Anspruch 1, wobei der genannte digitale Phasenfehlerausstattungsschritt (ΣΔ mod) eine 1-Bit Sigma-Delta-Modulation eines (V) der genannten analogen demodulierten Farbdifferenzsignale (U, V) umfasst.

5. Verfahren nach Anspruch 1, wobei ein fester HF-Systemtaktgeber (fs) verwendet wird zum Erhalten der genannten digitalen Quadratursignale.

6. Anordnung zum Demodulieren eines analogen quadraturmodulierten Signals (C), wobei die Anordnung Folgendes umfasst:
- wenigstens einen digitalen Phasenakkumulator (DPA), vorgesehen zum Erzeugen (DPA, SIN ROM, COS ROM) digitaler Quadratursignale;
- wenigstens einen multiplizierenden Digital-Analog-Wandler, vorgesehen zum Demodulieren (MIL DAC U, MUL DAC V) des genannten analogen quadraturmodulierten Signals (C) mit Hilfe der genannten digitalen Quadratursignale zum Erhalten analoger demodulierter Signale (U, V);
- wenigstens einen Analog-Digital-Wandler, vorgesehen zum Ausstatten (ΣΔ mod) eines digitalen Phasenfehlersignals von wenigstens einem (V) der genannten analogen demodulierten Signale (U, V); und
- Mittel zum digitalen Filtern (DLF) des genannten digitalen Fehlersignals zum Erhalten eines Phasensteuersignals (K) für die genannten digitalen Quadratursignale erzeugenden Mittel (DPA, SIN ROM, COS ROM).

7. Fernsehsignalwiedergabeanordnung, die Folgendes umfasst:
- Mittel (Y/C sep) zum Erzeugen von Leuchtdichte- (Y) und Farbartsignalen;
- eine Anordnung (Fig. 2) nach Anspruch 6 zum Demodulieren eines analogen Farbartsignals (C) zum Erhalten analoger demodulierter Farbdifferenzsignale (U, V);
- Mittel (MX) zum Liefern von Farbsignalen (R, G, B) aus dem genannten Leuchtdichtesignal (Y) und der genannten analogen demodulierten Farbdifferenzsignalen (U, V); und
- Mittel (D) zum Wiedergeben der genannten Farbsignale (R, G, B).

## Revendications

1. Procédé de démodulation d'un signal analogique de chrominance (C), le procédé comprenant les étapes suivantes :
- générer (DPA, SIN ROM, COS ROM) des signaux numériques en quadrature avec au moins un accumulateur de phase numérique (DPA);
- démoduler (MUL DAC U, MUL DAC V) ledit signal analogique de chrominance (C) par le moyen desdits signaux numériques en quadrature avec au moins un convertisseur numérique / analogique multiplieur (MUL DAC), pour obtenir des signaux analogiques démodulés de différence de couleur (U, V);
- fournir (ΣΔ mod) un signal numérique d'erreur de phase à partir d'au moins un (V) desdits signaux analogiques démodulés de différence de couleur (U, V) avec au moins un convertisseur analogique / numérique; et
- filtrer numériquement (DLF) ledit signal numérique d'erreur de phase pour obtenir un signal de commande de phase (K) pour ladite étape de génération (DPA, SIN ROM, COS ROM) de signaux numériques en quadrature.

2. Procédé selon la revendication 1, dans lequel ladite étape de génération (DPA, SIN ROM, COS ROM) de signaux numériques en quadrature comprend les étapes suivantes :
- accumuler (DPA) ledit signal de commande de phase (K) pour obtenir des signaux d'adresse; et
- adresser des tables à consulter (SIN ROM, COS ROM) par le moyen desdits signaux d'adresse pour obtenir lesdits signaux numériques en quadrature.

3. Procédé selon la revendication 1, dans lequel ladite étape de démodulation (MUL DAC U, MUL DAC V) comprend les étapes d'appliquer ledit signal analogique de chrominance (C) à des entrées de référence de convertisseurs numériques / analogiques multiplieurs qui ont des entrées numériques couplées pour recevoir lesdits signaux numériques en quadrature.

4. Procédé selon la revendication 1, dans lequel ladite étape de fournir une erreur numérique de phase (ΣΔ mod) comprend une modulation Sigma - Delta à 1 bit d'un (V) desdits signaux analogiques démodulés de différence de couleur (U, V).

5. Procédé selon la revendication 1, dans lequel une horloge de système à haute fréquence déterminée (fs) est utilisée pour obtenir lesdits signaux numériques en quadrature.

6. Dispositif pour démoduler un signal analogique modulé en quadrature (C), le dispositif comprenant :
- au moins un accumulateur de phase numérique (DPA) disposé pour générer (DPA, SIN ROM, COS ROM) des signaux numériques en quadrature;
- au moins un convertisseur numérique / analogique multiplieur disposé pour démoduler (MUL DAC U, MUL DAC V) ledit signal analogique modulé en quadrature (C) par le moyen desdits signaux numériques en quadrature, pour obtenir des signaux analogiques démodulés (U, V);
- au moins un convertisseur analogique / numérique disposé pour fournir (ΣΔ mod) un signal numérique d'erreur de phase à partir d'au moins un (V) desdits signaux analogiques démodulés (U, V); et
- un moyen pour filtrer numériquement (DLF) ledit signal numérique d'erreur de phase pour obtenir un signal de commande de phase (K) pour ladite étape de génération (DPA, SIN ROM, COS ROM) de signaux numériques en quadrature.

7. Appareil d'affichage de signal de télévision, comportant :
- un moyen (Y/C sep) pour générer des signaux de luminance (Y) et de chrominance (C);
- un dispositif (Fig. 2) selon la revendication 6 pour démoduler un signal analogique de chrominance pour obtenir des signaux analogiques démodulés de différence de couleur (U, V);
- un moyen (MX) pour fournir des signaux de couleur (R, G, B) à partir dudit signal de luminance (Y) et desdits signaux analogiques démodulés de différence de couleur (U, V); et
- un moyen (D) pour afficher lesdits signaux de couleur (R, G, B).
